# EUROPEAN PATENT SPECIFICATION

(11) **EP 4 435 581 B1**
(45) Date of publication and mention of the grant of the patent: **06.08.2025**
(21) Application number: 24165284.1
(22) Date of filing: 21.03.2024
(51) Int. Cl.: G06F 3/06

(54) **ZONED NAMESPACES STORAGE DEVICE AND SYSTEM**
VORRICHTUNG UND SYSTEM ZUR SPEICHERUNG VON IN ZONEN UNTERTEILTEN NAMENSRÄUMEN
DISPOSITIF ET SYSTÈME DE STOCKAGE D'ESPACES DE NOMMAGE EN ZONES

(30) Priority: 23.03.2023 US 202318189153
(43) Date of publication of application: 25.09.2024
(73) Proprietor: Lemon Inc., Grand Cayman, KY1-1205 (KY)
(72) Inventor: XU, Peng, Los Angeles, 90066 (US); LIU, Fei, Los Angeles, 90066 (US); BAE, Kyoungryun, Los Angeles, 90066 (US); IM, Hyungjin, Los Angeles, 90066 (US); KIM, Jinhyuk, Los Angeles, 90066 (US); KIM, Kyung Ho, Los Angeles, 90066 (US); AMRITKAR, Prathamesh, Los Angeles, 90066 (US); HU, Chaohong, Los Angeles, 90066 (US)
(74) Representative: Marks & Clerk LLP

(56) References cited:
- WO-A1-2021/050107
- ANONYMOUS: "Compare-and-swap - Wikipedia", 21 February 2019 (2019-02-21), pages 1 - 7, XP055883033, Retrieved from the Internet <URL:https://en.wikipedia.org/w/index.php?title=Compare-and-swap&oldid=884339820> [retrieved on 20220124]
- BJØRLING MATIAS: "Zoned Namespaces (ZNS) SSDs: Disrupting the Storage Industry", 22 September 2020 (2020-09-22), XP093124939, Retrieved from the Internet <URL:https://snia.org/sites/default/files/SDC/2020/075-Bjørling-Zoned-Namespaces-ZNS-SSDs.pdf> [retrieved on 20240129]
- MAHESHWARI UMESH UMESH@ALUM MIT EDU: "From blocks to rocks a natural extension of zoned namespaces", PROCEEDINGS OF THE 29TH ACM JOINT MEETING ON EUROPEAN SOFTWARE ENGINEERING CONFERENCE AND SYMPOSIUM ON THE FOUNDATIONS OF SOFTWARE ENGINEERING, ACMPUB27, NEW YORK, NY, USA, 27 July 2021 (2021-07-27), pages 21 - 27, XP058766904, ISBN: 978-1-4503-8563-3, DOI: 10.1145/3465332.3470870

## Description

### FIELD

The present disclosure relates to the field of storage and more particularly to a zoned namespaces storage device and system.

### BACKGROUND

The NVMe (non-volatile memory express) specification is a logical-device interface specification for accessing non-volatile storage media which is attached to a host computing device via a Peripheral Component Interconnect (PCI) Express (PCIe) bus. The NVMe specification may be used with a variety of non-volatile storage media, such as solid state drives (SSDs). One focus of the NVMe specification relates to input/output (I/O) communication between a host device, which may access and/or write to the non-volatile storage media, and a memory device which includes the non-volatile storage media. In this regard, NVMe implements a paired submission queue and completion queue mechanism, with host software on the host device placing commands into the submission queue. Completions are placed onto the associated completion queue by the memory device controller of the storage device.

An NVMe device implementing the NVMe specification may process write commands in a Relaxed Ordering mechanism, in which write commands sent by a requester are reordered and completed by a completer in an order that is different from the original order in which the write commands were sent. Patent application WO2021050107A1 teaches completing write commands in the order in which they are received and maintaining a table for each zone to track where data is written.

This may pose problems in an NVMe device implementing the Zoned Namespaces (ZNS) specification, which requires that zones be written sequentially. Under the ZNS specification, each zone of the device address space has a write pointer which keeps track of the position of the next write. Zone write commands advance the write pointer to the end of the newly written data. Preserving the sequential order of the zone write commands is especially important to ensure that the write pointer is advanced to the appropriate positions in the address space, so that zone write commands are executed at the correct locations in the non-volatile memory.

Commands may be scrambled out of order in the following situations:
1. Command fetch: A controller may fetch submission queue entries from the host memory by sending a memory read request to the host memory. However, the fetched submission queue entries may be scrambled out of order due to various circumstances, including bad link quality.
2. Command data transfer: Responsive to receiving a zone write command, the controller may fetch a physical region page (PRP) entry or scatter gather list (SGL) entry to enable a data transfer. However, the resulting data transfer may not preserve the original order of the data.
3. Controller-to-firmware Application Program Interface (API): Some controllers use an API like a Host-Tag bitmap for firmware to process the incoming commands. As the bitmap does not contain any order information, the firmware may not preserve the original order of the data.
4. Multi-core processing: Some controllers dispatch commands from the same submission queue to different API queues, and then the commands are processed by different cores, which also may lead to commands that are executed out of order.

### SUMMARY

In view of the above, a zoned namespaces (ZNS) storage computing device is provided. The ZNS storage computing device comprises a processor, and non-volatile memory comprising a plurality of zones including a given zone. The processor is configured to execute a zone writing program to receive zone write commands, and responsive to receiving the zone write commands, execute the zone write commands on the given zone of the non-volatile memory of the storage computing device in an order specified by zone write sequence numbers included in a zone descriptor for the given zone.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 illustrates a schematic view of a computing system according to an example of the present disclosure.
Fig. 2 illustrates an expanded schematic view of the storage device of the computing system of Fig. 1.
Fig. 3 is a flowchart of a method for writing zone commands on a given zone of non-volatile memory according to an example embodiment of the present disclosure.

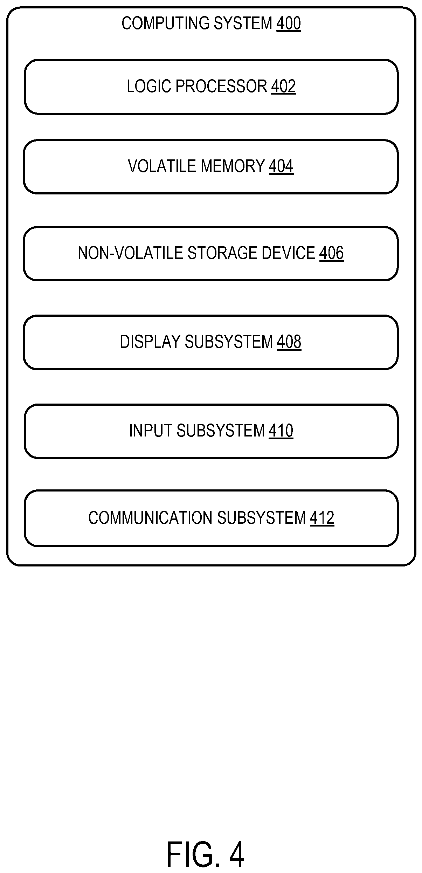

Fig. 4 shows an example computing environment of the present disclosure.

### DETAILED DESCRIPTION OF EMBODIMENTS

In view of the above issues, the present disclosure describes a system and method for preserving the order in which zone write commands are issued on a NVMe ZNS storage device which is connected to a host computing device via a PCI Express (PCIe) bus.

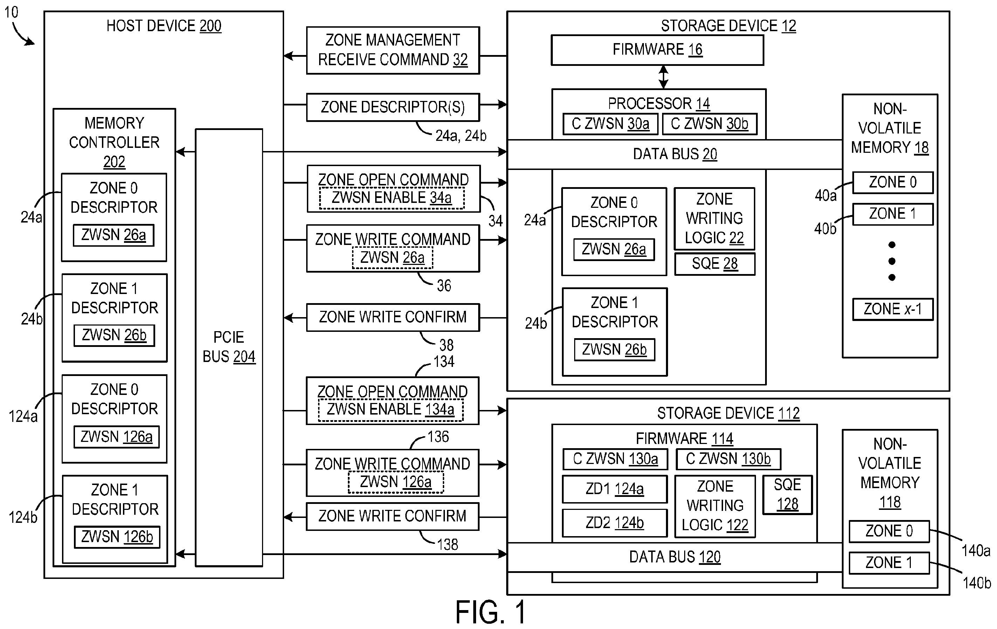

Referring to Fig. 1, a computing system 10 comprises a storage device 12 including a processor 14, firmware 16, non-volatile memory 18, and a data bus 20 coupled to the processor 14 and the non-volatile memory 18. The processor is configured to execute a zone writing program 22 or logic to receive zone write commands 36, and responsive to receiving the zone write commands 36, execute the zone write commands 36 on a given zone of the non-volatile memory 18. The processor 14 is a microprocessor, which can include an application specific integrated circuit (ASIC). The firmware 16 may be configured as permanent software programmed into a read-only memory of the storage device 12.

The processor 14 of the storage device 12 communicates with a memory controller 202 of a host device 200 via a PCIe bus 204. The storage device 12 may be a rack mounted storage platform containing individual solid state drives, in one particular example. The non-volatile memory 18 of the storage device 12 is divided into zoned namespaces, including a plurality of zones 40a, 40b. Each zone 40a, 40b of the non-volatile memory 18 is a contiguous range of logical block addresses that are managed as a single unit. The number of zones 40a, 40b in the non-volatile memory 18 is not particularly limited, and the non-volatile memory 18 in the example of Fig. 1 is depicted as having x zones.

The host device 200 and the storage device 12 store one or a plurality of zone descriptor 24a, 24b, which are data structures containing information about the zones 40a, 40b of the non-volatile memory 18 of the storage device 12. Each zone 40a, 40b has an associated zone descriptor 24a, 24b which contains a set of attributes including associated zone write sequence numbers (ZWSN) 26a, 26b, which record an order in which zone write commands 36 are issued by the memory controller 202 of the host device 200 for each zone 40a, 40b. The storage device 12 may retrieve the zone descriptors 24a, 24b and the zone write sequence numbers 26a, 26b by sending a zone management receive command 32 to the host device 200 to request a zone descriptor 24a, 24b. Responsive to receiving the zone management receive command 32, the host device 200 sends one or a plurality of zone descriptors 24a, 24b to the storage device 12. Accordingly, the storage device 12 can execute the zone write commands 36 in an order which is specified by zone write sequence numbers 26a, 26b included in the zone descriptor 24a, 24b for a given zone 40a, 40b.

Although only two zone descriptors 24a, 24b are depicted in the example of Fig. 1, it will be appreciated that the processor 14 may retrieve any number of zone descriptors corresponding to the zones of the non-volatile memory 18 on which zone write commands are to be executed. The zone descriptors 24a, 24b may include support bits in the reserved fields of their data structures indicating that zone write sequence numbers are supported. The reserved fields of the zone write commands 36 may be configured to include the zone write sequence numbers 26a, 26b, so that the storage device 12 may retrieve the zone descriptors 24a, 24b and the zone write sequence numbers 26a, 26b from the reserved fields of the zone write commands.

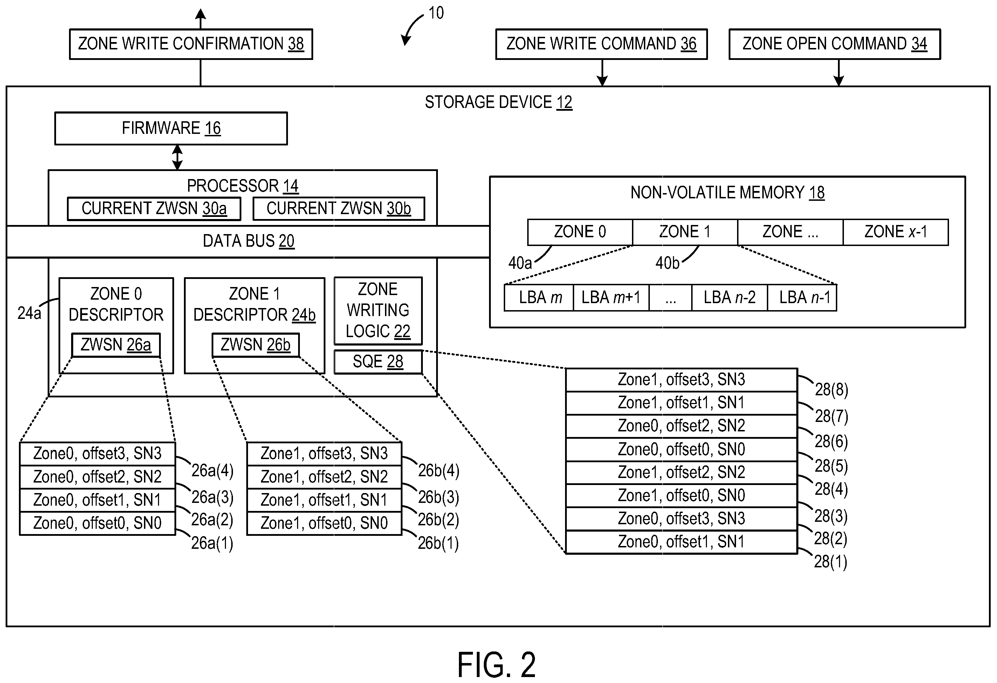

Turning to Fig. 2, an expanded view is depicted of the storage device 12 of Fig. 1. Each zone write command 36 for each zone is assigned a zone write sequence number 26a, 26b starting with zero for the first sequence number. In the example of Fig. 2, the zone write sequence numbers 26a in the zone zero descriptor 24a comprise write commands 26a(1)-(4) for zone zero 40a. The zone write sequence numbers 26b in the zone one descriptor 24b comprise write commands 26b(1)-(4) for zone one 40b. For zone zero 40a, the offset0 write command is assigned the SN0 sequence number 26a(1), the offset1 write command is assigned the SN1 sequence number 26a(2), the offset2 write command is assigned the SN2 sequence number 26a(3), and the offset3 write command is assigned the SN3 sequence number 26a(4), so that the offset0, offset1, offset2, and offset3 write commands are executed on the logical block addresses of zone zero 40a in this specified order.

Similarly, for zone one 40b, the offset0 write command is assigned the SN0 sequence number 26b(1), the offset1 write command is assigned the SN1 sequence number 26b(2), the offset2 write command is assigned the SN2 sequence number 26b(3), and the offset3 write command is assigned the SN3 sequence number 26b(4), so that the offset0, offset1, offset2, and offset3 write commands are executed on the logical block addresses of zone one 40b in this specified order.

Responsive to receiving a zone open command 34 from the host device 200, the processor 14 opens a given zone on the non-volatile memory 18 for executing zone write commands. In the example of Fig. 2, the zone open command 34 causes the processor 14 to open zone zero 40a and zone one 40b for executing zone write commands 36. Each zone is assigned a current zone write sequence number 30a, 30b so that zone zero 40a is assigned a first current zone write sequence number 30a, and zone one 40b is assigned a second current zone write sequence number 30b. When a given zone is opened, the current zone write sequence number 30a, 30b for the given zone is reset to zero. The processor 14 then receives and holds the zone write commands 36 in a submission queue 28 preserving an order in which the zone write commands 36 were received by the processor 14. The zone open command 34 may be configured with a zone write sequence number support bit 34a to indicate to the storage device 12 that that the host device 200 supports zone write sequence numbers 26a, 26b.

As depicted in the example of Fig. 2, the zone commands in the submission queue 28 are scrambled due to a bad link quality. The submission queue 28 includes a first zone write command 28(1) specifying offset1 for zone 0, a second zone write command 28(2) specifying offset3 for zone 0, a third zone write command 28(3) specifying offset0 for zone 1, a fourth zone write command 28(4) specifying offset2 for zone 1, a fifth zone write command 28(5) specifying offset0 for zone 0, a sixth zone write command 28(6) specifying offset2 for zone 0, a seventh zone write command 28(7) specifying offset1 for zone 1, and an eighth zone write command 28(8) specifying offset3 for zone 1, in this order.

The processor 14 then compares the entries of the submission queue 28 to the zone write sequence numbers 26a, 26b included in the zone descriptor 24a, 24b, comparing the current zone write sequence number 30a, 30b of the zone descriptor 24a, 24b with the write commands in the submission queue 28. The processor 14 may iterate through the submission queue 28 in a loop to compare each zone write command in the submission queue 28 to the current zone write sequence number 30a, 30b. For example, when the current zone write sequence number 30a for zone 0 is zero, the processor 14 compares the zone write sequence number 26a(1) for zone 0 at sequence number zero (SN0) with the first zone write command 28(1) in the submission queue 28. When the first zone write command 28(1) does not match the current write sequence number 30a or does not meet the criteria for aborting the submission queue 28, then the processor 14 compares the current write sequence number 30a to the next zone write command in the submission queue 28: the second zone write command 28(2). When the processor 14 is configured as a multi-core processor, then the processor 14 may use a compare-and-swap (CAS) instruction to perform the comparisons in shared memory.

The processor 14 then determines whether the current zone write sequence number 30a of the zone descriptor 24a matches the write command in the submission queue 28, whether the zone write command in the submission queue 28 has a sequence number which is greater than the current zone write sequence number 30a of the zone descriptor 24a, whether the write command in the submission queue 28 has a sequence number which is less than the current zone write sequence number 30a of the zone descriptor 24a, and whether a timeout timestamp attached to a zone write command has expired.

When the current zone write sequence number 30a of the zone descriptor 24a matches the write command in the submission queue 28, then the write command is executed by the processor 14, the current zone write sequence number 30a is incremented by one, the write command is removed from the submission queue 28, and a write command confirmation 38 or acknowledgment is sent to the host device 200. For example, when the current zone write sequence number 30a is zero, and the fifth zone write command 28(5) of the submission queue 28 matches the current zone write sequence number 26a(1) at sequence number zero (SN0), then the fifth zone write command 28(5) is executed by the processor 14, the current zone write sequence number 30a is incremented by one, the fifth zone write command 28(5) is removed from the submission queue 28, and a write command confirmation 38 is sent to the host device 200.

When the zone write command in the submission queue 28 has a sequence number which is greater than the current zone write sequence number 30a of the zone descriptor 24a, then the write command is held as pending in the submission queue 28, and a timeout timestamp is attached to the write command, recording the time at which the write command was held as pending in the submission queue 28. For example, when the current zone write sequence number 30a is zero, and the first zone write command 28(1) of the submission queue 28 has a sequence number of one, which is greater than the current zone write sequence number 30a of zero, then the first zone write command 28(1) is held in the submission queue 28, and a timeout timestamp is attached to the write command. When a zone write command with a timeout timestamp is not executed by the processor 14 within a predetermined time period specified by the timeout stamp, then the processor 14 determines that the zone write command has expired, and aborts all the write commands in the submission queue 28.

When the write command in the submission queue 28 has a sequence number which is less than the current zone write sequence number 30a of the zone descriptor 24a, then the processor 14 aborts all the write commands in the submission queue 28. For example, when the current zone write sequence number 30a is three, and the zone write command 28(6) in the submission queue 28 is two, then the processor 14 aborts all the write commands in the submission queue 28.

Referring back to Fig. 1, operations of a second storage device 112 are described in detail. In the second storage device 112, a processor is configured as firmware 114 to execute the zone writing program 122. Since the features of the second storage device 112 are similar to the first storage device 12 with the exception of the firmware 114, the detailed description thereof is abbreviated here. Like parts in this example are numbered similarly and share their functions with the exception of the firmware 114, and will not be described again except as below for the sake of brevity.

The second storage device 112 includes firmware 114, non-volatile memory 118, and a data bus 120 coupled to the firmware 114 and the non-volatile memory 118. The firmware 114 is configured to execute zone writing program 122 or logic to perform zone write commands 136 on the non-volatile memory 118 according to the zone writing program 122. The firmware 114 may be configured as permanent software programmed into a read-only memory of the storage device 112. The host device 200 and the storage device 112 store one or a plurality of zone descriptor 124a, 124b, which are data structures containing information about the zones 140a, 140b of the non-volatile memory 118 of the storage device 112.

The firmware 114 of the storage device 112 communicates with a memory controller 202 of a host device 200 via a PCIe bus 204. Responsive to receiving a zone open command 134 from the host device 200, the firmware 114 opens a given zone for executing zone write commands. In the example of Fig. 2, the zone open command 134 causes the firmware 114 to open zone zero 140a and zone 140b for executing zone write commands 136. When a given zone is opened, the current sequence number 130a, 130b for the given zone is reset to zero. The firmware 114 then receives and holds the zone write commands 136 in a submission queue 128 preserving an order in which the zone write commands 136 were received by the firmware 114.

The firmware 114 compares the entries of the submission queue 128 to the zone write sequence numbers 126a, 126b of the zone descriptor 124a, 124b, comparing the current zone write sequence number 130a, 130b of the zone descriptor 124a, 124b with the write commands in the submission queue 128. When the storage device 112 is configured as a multi-core processor, then the firmware 16 may use CAS instruction to perform the comparisons in shared memory.

The firmware 114 then determines whether the current zone write sequence number 130a of the zone descriptor 124a matches the write command in the submission queue 128, whether the zone write command in the submission queue 128 has a sequence number which is greater than the current zone write sequence number 130a of the zone descriptor 124a, whether the write command in the submission queue 128 has a sequence number which is less than the current zone write sequence number 130a of the zone descriptor 124a, and whether a timeout timestamp attached to a zone write command has expired.

When the current zone write sequence number 130a of the zone descriptor 124a matches the write command in the submission queue 128, then the write command is executed by the firmware 114, the current zone write sequence number 130a is incremented by one, the write command is removed from the submission queue 128, and a write command confirmation 138 or acknowledgment is sent to the host device 200.

When the write command in the submission queue 128 has a sequence number which is greater than the current zone write sequence number 130a of the zone descriptor 124a, then the write command is held as pending in the submission queue 128, and a timeout timestamp is attached to the write command, recording the time at which the write command was held as pending in the submission queue 128. When a zone write command with a timeout timestamp is not executed by the firmware 114 within a predetermined time period, then the firmware 114 determines that the write command has expired, and aborts all the write commands in the submission queue 128.

When the write command in the submission queue 128 has a sequence number which is less than the current zone write sequence number 130a of the zone descriptor 124a, then the firmware 114 aborts all the write commands in the submission queue 128.

The reserved fields of the zone write commands 136 may be configured to include the zone write sequence numbers 126a, 126b. The zone open command 134 may be configured with a zone write sequence number support bit 134a to indicate to the storage device 112 that that the host device 200 supports zone write sequence numbers 126a, 126b.

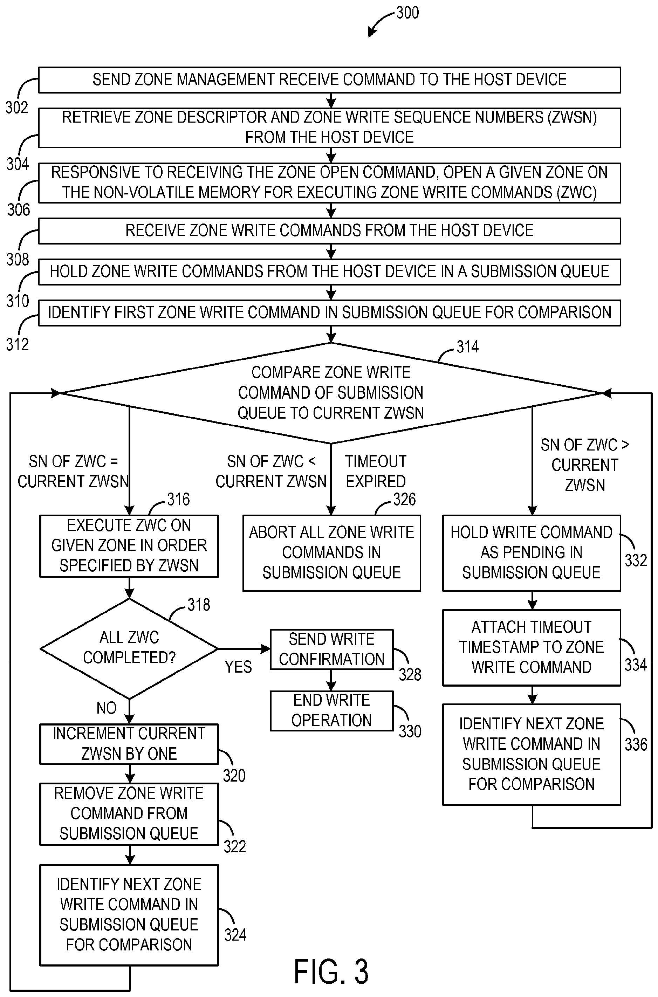

Fig. 3 illustrates a flowchart of a computerized method 300 for executing zone write commands on a given zone of the non-volatile memory of a storage device in an order specified by zone write sequence numbers included in a zone descriptor for the given zone in accordance with a zone writing program. The following description of computerized method 300 is provided with reference to the software and hardware components described above and shown in Figs. 1 and 2. It will be appreciated that computerized method 300 also may be performed in other contexts using other suitable hardware and software components.

At step 302, zone management receive command is sent to host device. At step 304, a zone descriptor and zone write sequence numbers are retrieved from the host device. Each of the plurality of zones of the non-volatile memory of the storage device has an associated zone descriptor, and each zone descriptor has associated zone write sequence numbers, which record an order in which zone write commands are issued by a memory controller of the host device.

At step 306, a zone open command is received from the host device. At step 308, responsive to receiving the zone open command, a given zone is opened on the non-volatile memory for executing zone write commands. At step 310, zone write commands are received from the host device. At step 312, zone write commands from the host device are held in a submission queue.

At step 314, the zone write commands of the submission queue are compared to the zone write sequence numbers. It is determined whether the current zone write sequence number of the zone descriptor matches the write command in the submission queue, whether the zone write command in the submission queue has a sequence number which is greater than the current zone write sequence number of the zone descriptor, whether the write command in the submission queue has a sequence number which is less than the current zone write sequence number of the zone descriptor, and whether a timeout timestamp attached to a zone write command has expired.

At step 316, responsive to determining that the current zone write sequence number of the zone descriptor matches the write command in the submission queue, the zone write command is executed on the given zone of the non-volatile memory of the storage device in an order specified by the zone write sequence numbers included in the zone descriptor for the given zone. At step 318, it is determined whether all the zone write commands in the submission queue have been executed.

At step 328, responsive to determining that all the zone write commands in the submission queue have been executed, a write command confirmation or acknowledgment is sent to the host device, and at step 330, the zone write operation is terminated.

At step 320, responsive to determining that all the zone write commands in the submission queue have not been executed, the current zone write sequence number is incremented by one. At step 322, the zone write command is removed from the submission queue. At step 324, the next zone write command is identified in the submission queue for comparison to the current zone write sequence number, and the method 300 returns to step 314.

At step 326, responsive to determining that the write command in the submission queue has a sequence number which is less than the current zone write sequence number of the zone descriptor, or responsive to determining that a timeout timestamp attached to a zone write command has expired, all write commands in the submission queue are aborted.

At step 332, responsive to determining that the zone write command in the submission queue has a sequence number which is greater than the current zone write sequence number of the zone descriptor, the zone write command is held as pending in the submission queue. At step 334, a timeout timestamp is attached to the held zone write command. At step 336, the next zone write command is identified in the submission queue for comparison to the current zone write sequence number, and the method 300 returns to step 314.

The above-described system and method allow zone write commands in an NVMe device implementing the ZNS specification to be executed in the original order in which the write commands were sent by a host device. Accordingly, the original sequential order of the zone write commands can be preserved, and zone write commands can be prevented from being executed out of order in various situations, including command fetches, command data transfers, controller-to-firmware APIs, and multi-core processing.

In some embodiments, the methods and processes described herein may be tied to a computing system of one or more computing devices. In particular, such methods and processes may be implemented as a computer-application program or service, an application-programming interface (API), a library, and/or other computer-program product.

Fig. 5 schematically shows a non-limiting embodiment of a computing system 400 that can enact one or more of the methods and processes described above. Computing system 400 is shown in simplified form. Computing system 400 may embody the storage device 12 or host device 200 described above and illustrated in Figs. 1 and 2. Computing system 400 may take the form of one or more personal computers, server computers, tablet computers, home-entertainment computers, network computing devices, gaming devices, mobile computing devices, mobile communication devices (e.g., smart phone), and/or other computing devices, and wearable computing devices such as smart wristwatches and head mounted augmented reality devices.

Computing system 400 includes a logic processor 402 volatile memory 404, and a non-volatile storage device 406. Computing system 400 may optionally include a display subsystem 408, input subsystem 410, communication subsystem 412, and/or other components not shown in Fig. 5.

Logic processor 402 includes one or more physical devices configured to execute instructions. For example, the logic processor may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors (hardware) configured to execute software instructions. Additionally or alternatively, the logic processor may include one or more hardware logic circuits or firmware devices configured to execute hardware-implemented logic or firmware instructions. Processors of the logic processor 402 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 406 includes one or more physical devices configured to hold instructions executable by the logic processors to implement the methods and processes described herein. When such methods and processes are implemented, the state of non-volatile storage device 406 may be transformed-e.g., to hold different data.

Non-volatile storage device 406 may include physical devices that are removable and/or built-in. Non-volatile storage device 406 may include optical memory (e.g., CD, DVD, HD-DVD, etc.), semiconductor memory (e.g., ROM, EPROM, EEPROM, FLASH memory, etc.), and/or magnetic memory (e.g., hard-disk drive, floppy-disk drive, tape drive, MRAM, etc.), or other mass storage device technology. Non-volatile storage device 406 may include nonvolatile, dynamic, static, read/write, read-only, sequential-access, location-addressable, file-addressable, and/or content-addressable devices. It will be appreciated that non-volatile storage device 406 is configured to hold instructions even when power is cut to the non-volatile storage device 406.

Volatile memory 404 may include physical devices that include random access memory. Volatile memory 404 is typically utilized by logic processor 402 to temporarily store information during processing of software instructions. It will be appreciated that volatile memory 404 typically does not continue to store instructions when power is cut to the volatile memory 404.

Aspects of logic processor 402, volatile memory 404, and non-volatile storage device 406 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 400 typically implemented in software by a processor to perform a particular function using portions of volatile memory, which function involves transformative processing that specially configures the processor to perform the function. Thus, a module, program, or engine may be instantiated via logic processor 402 executing instructions held by non-volatile storage device 406, using portions of volatile memory 404. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 408 may be used to present a visual representation of data held by non-volatile storage device 406. The visual representation may take the form of a graphical user interface (GUI). Display subsystem 408 may include one or more display devices. Such display devices may be combined with logic processor 402, volatile memory 404, and/or non-volatile storage device 406 in a shared enclosure, or such display devices may be peripheral display devices.

When included, input subsystem 410 may comprise or interface with one or more user-input devices such as a keyboard, mouse, or touch screen. Such componentry may be integrated or peripheral, and the transduction and/or processing of input actions may be handled on- or off-board.

When included, communication subsystem 412 may be configured to communicatively couple various computing devices described herein with each other, and with other devices. Communication subsystem 412 may include wired and/or wireless communication devices compatible with one or more different communication protocols. As non-limiting examples, the communication subsystem may be configured for communication via a wireless telephone network, or a wired or wireless local- or wide-area network, such as a HDMI over Wi-Fi connection. In some embodiments, the communication subsystem may allow computing system 400 to send and/or receive messages to and/or from other devices via a network such as the Internet.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies.

It will be appreciated that "and/or" as used herein refers to the logical disjunction operation, and thus A and/or B has the following truth table.

| A | B | A and/or B |
|---|---|---|
| T | T | T |
| T | F | T |
| F | T | T |
| F | F | F |

## Claims

1. A zoned namespaces, ZNS, storage computing device comprising:
a processor (14); and
non-volatile memory (18) comprising a plurality of zones (40a, 40b) including a given zone, wherein
the processor (14) is configured to execute a zone writing program to:
receive zone write commands (36); and
responsive to receiving the zone write commands (36), execute the zone write commands (36) on the given zone of the non-volatile memory (18) of the storage computing device (12) in an order specified by zone write sequence numbers (24a, 24b) included in a zone descriptor for the given zone,
wherein the processor holds zone write commands from a host device in a submission queue; and
the processor compares the zone write commands of the submission queue to the zone write sequence numbers,
wherein one of:
when a current zone write sequence number matches a zone write command in the submission queue, then the zone write command is executed by the processor, the current zone write sequence number is incremented by one, and the zone write command is removed from the submission queue;
when a zone write command in the submission queue has a sequence number which is greater than a current zone write sequence number, then the zone write command is held as pending in the submission queue, and a timeout timestamp is attached to the zone write command; or
when a zone write command in the submission queue has a sequence number which is less than a current zone write sequence number, then the processor aborts all the zone write commands in the submission queue.

2. The ZNS storage computing device of claim 1, wherein the processor is configured as firmware.

3. The ZNS storage computing device of claim **1,** wherein the processor includes an application specific integrated circuit, ASIC.

4. The ZNS storage computing device of claim **1,** wherein
each of the plurality of zones has an associated zone descriptor; and
each zone descriptor has associated zone write sequence numbers, which record an order in which zone write commands are issued by a memory controller of a host device.

5. The ZNS storage computing device of claim **1,** wherein the zone write sequence numbers are included in reserved fields of the zone write commands.

6. The ZNS storage computing device of claim 1, wherein the processor is configured as a multi-core processor, and uses a compare-and-swap, CAS, instruction to perform the comparisons in shared memory of the ZNS storage computing device.

7. A zoned namespaces, ZNS, storage method for executing zone write commands (36) on non-volatile memory (18) comprising a plurality of zones (40a, 40b), the method comprising:
receiving zone write commands (36); and
responsive to receiving the zone write commands (36), executing the zone write commands (36) on a given zone of the non-volatile memory (18) of a storage device (12) in an order specified by zone write sequence numbers (24a, 24b) included in a zone descriptor for the given zone
wherein the method further comprises:
holding zone write commands from a host device in a submission queue; and
comparing the zone write commands of the submission queue to the zone write sequence numbers,
wherein one of:
when a current zone write sequence number matches a zone write command in the submission queue, then the zone write command is executed, the current zone write sequence number is incremented by one, and the zone write command is removed from the submission queue;
when a zone write command in the submission queue has a sequence number which is greater than a current zone write sequence number, then the zone write command is held as pending in the submission queue, and a timeout timestamp is attached to the zone write command; or
when a zone write command in the submission queue has a sequence number which is less than a current zone write sequence number, then all the zone write commands in the submission queue are aborted.

8. The ZNS storage method of claim 7, further comprising:
retrieving the zone descriptor and the zone write sequence numbers for the given zone from a host device, wherein
each of the plurality of zones has an associated zone descriptor; and
each zone descriptor has associated zone write sequence numbers, which record an order in which zone write commands are issued by a memory controller of the host device.

9. The ZNS storage method of claim 7, further comprising:
retrieving the zone write sequence numbers from reserved fields of the zone write commands.

10. The ZNS storage method of claim 7, further comprising:
using a compare-and-swap, CAS, instruction to perform the comparisons.

## Patentansprüche

1. Speichercomputervorrichtung für in Zonen unterteilte Namensräume, ZNS, umfassend:
einen Prozessor (14); und
nichtflüchtigen Speicher (18), umfassend eine Vielzahl von Zonen (40a, 40b), einschließlich einer gegebenen Zone, wobei
der Prozessor (14) konfiguriert ist, um ein Zonenschreibprogramm auszuführen zum:
Empfangen von Zonenschreibbefehlen (36); und
als Reaktion auf das Empfangen der Zonenschreibbefehle (36), Ausführen der Zonenschreibbefehle (36) in der gegebenen Zone des nichtflüchtigen Speichers (18) der Speichercomputervorrichtung (12) in einer Reihenfolge, die durch Zonenschreibsequenznummern (24a, 24b) spezifiziert ist, die in einem Zonendeskriptor für die gegebene Zone eingeschlossen sind,
wobei der Prozessor Zonenschreibbefehle von einer Hostvorrichtung in einer Übermittlungswarteschlange hält; und
der Prozessor die Zonenschreibbefehle der Übermittlungswarteschlange mit den Zonenschreibsequenznummern vergleicht,
wobei eines von Folgendem:
wenn eine aktuelle Zonenschreibsequenznummer mit einem Zonenschreibbefehl in der Übermittlungswarteschlange übereinstimmt, dann wird der Zonenschreibbefehl von dem Prozessor ausgeführt, die aktuelle Zonenschreibsequenznummer wird um eins erhöht und der Zonenschreibbefehl wird aus der Übermittlungswarteschlange entfernt;
wenn ein Zonenschreibbefehl in der Übermittlungswarteschlange eine Sequenznummer aufweist, die größer als eine aktuelle Zonenschreibsequenznummer ist, dann wird der Zonenschreibbefehl in der Übermittlungswarteschlange als ausstehend gehalten und ein Timeout-Zeitstempel wird an den Zonenschreibbefehl angehängt; oder
wenn ein Zonenschreibbefehl in der Übermittlungswarteschlange eine Sequenznummer aufweist, die kleiner ist als eine aktuelle Zonenschreibsequenznummer, dann bricht der Prozessor alle Zonenschreibbefehle in der Übermittlungswarteschlange ab.

2. ZNS-Speichercomputervorrichtung nach Anspruch 1, wobei der Prozessor als Firmware konfiguriert ist.

3. ZNS-Speichercomputervorrichtung nach Anspruch 1, wobei der Prozessor einen anwendungsspezifischen integrierten Schaltkreis, ASIC, einschließt.

4. ZNS-Speichercomputervorrichtung nach Anspruch 1, wobei
jede der Vielzahl von Zonen einen assoziierten Zonendeskriptor aufweist; und
jeder Zonendeskriptor assoziierte Zonenschreibsequenznummern aufweist, die eine Reihenfolge aufzeichnen, in der Zonenschreibbefehle von einer Speichersteuereinheit einer Hostvorrichtung ausgegeben werden.

5. ZNS-Speichercomputervorrichtung nach Anspruch 1, wobei die Zonenschreibsequenznummern in reservierten Feldern der Zonenschreibbefehle eingeschlossen sind.

6. ZNS-Speichercomputervorrichtung nach Anspruch 1, wobei der Prozessor als ein Mehrkernprozessor konfiguriert ist und eine Compare-and-Swap-Anweisung, CAS-Anweisung, verwendet, um die Vergleiche in einem gemeinsam genutzten Speicher der ZNS-Speichercomputervorrichtung durchzuführen.

7. Speicherverfahren für in Zonen unterteilte Namensräume, ZNS, zum Ausführen von Zonenschreibbefehlen (36) auf einem nichtflüchtigen Speicher (18), der eine Vielzahl von Zonen (40a, 40b) umfasst, wobei das Verfahren Folgendes umfasst:
Empfangen von Zonenschreibbefehlen (36); und
als Reaktion auf das Empfangen der Zonenschreibbefehle (36), Ausführen der Zonenschreibbefehle (36) in einer gegebenen Zone des nichtflüchtigen Speichers (18) einer Speichervorrichtung (12) in einer Reihenfolge, die durch Zonenschreibsequenznummern (24a, 24b) spezifiziert ist, die in einem Zonendeskriptor für die gegebene Zone eingeschlossen sind
wobei das Verfahren weiter umfasst:
Halten von Zonenschreibbefehlen von einer Hostvorrichtung in einer Übermittlungswarteschlange; und
Vergleichen der Zonenschreibbefehle der Übermittlungswarteschlange mit den Zonenschreibsequenznummern,
wobei eines von Folgendem:
wenn eine aktuelle Zonenschreibsequenznummer mit einem Zonenschreibbefehl in der Übermittlungswarteschlange übereinstimmt, dann wird der Zonenschreibbefehl ausgeführt, die aktuelle Zonenschreibsequenznummer wird um eins erhöht und der Zonenschreibbefehl wird aus der Übermittlungswarteschlange entfernt;
wenn ein Zonenschreibbefehl in der Übermittlungswarteschlange eine Sequenznummer aufweist, die größer als eine aktuelle Zonenschreibsequenznummer ist, dann wird der Zonenschreibbefehl in der Übermittlungswarteschlange als ausstehend gehalten und ein Timeout-Zeitstempel wird an den Zonenschreibbefehl angehängt; oder
wenn ein Zonenschreibbefehl in der Übermittlungswarteschlange eine Sequenznummer aufweist, die kleiner als eine aktuelle Zonenschreibsequenznummer ist, dann werden alle Zonenschreibbefehle in der Übermittlungswarteschlange abgebrochen.

8. ZNS-Speicherverfahren nach Anspruch 7, weiter umfassend:
Abrufen des Zonendeskriptors und der Zonenschreibsequenznummern für die gegebene Zone von einer Hostvorrichtung, wobei
jede der Vielzahl von Zonen einen assoziierten Zonendeskriptor aufweist; und
jeder Zonendeskriptor assoziierte Zonenschreibsequenznummern aufweist, die eine Reihenfolge aufzeichnen, in der Zonenschreibbefehle von einer Speichersteuereinheit der Hostvorrichtung ausgegeben werden.

9. ZNS-Speicherverfahren nach Anspruch 7, weiter umfassend:
Abrufen der Zonenschreibsequenznummern aus reservierten Feldern der Zonenschreibbefehle.

10. ZNS-Speicherverfahren nach Anspruch 7, weiter umfassend:
Verwenden einer Compare-and-Swap-Anweisung, CAS-Anweisung, um die Vergleiche durchzuführen.

## Revendications

1. Dispositif informatique de stockage d'espaces de noms zonés, ZNS, comprenant :
un processeur (14) ; et
une mémoire non volatile (18) comprenant une pluralité de zones (40a, 40b) incluant une zone donnée, dans lequel
le processeur (14) est configuré pour exécuter un programme d'écriture de zone pour :
recevoir des commandes d'écriture de zone (36) ; et
en réponse à la réception des commandes d'écriture de zone (36), exécuter les commandes d'écriture de zone (36) sur la zone donnée de la mémoire non volatile (18) du dispositif informatique de stockage (12) dans un ordre spécifié par des numéros de séquence d'écriture de zone (24a, 24b) inclus dans un descripteur de zone pour la zone donnée,
dans lequel le processeur conserve des commandes d'écriture de zone provenant d'un dispositif hôte dans une file d'attente de demandes ; et
le processeur compare les commandes d'écriture de zone de la file d'attente de demandes aux numéros de séquence d'écriture de zone,
dans lequel un parmi :
lorsqu'un numéro de séquence d'écriture de zone courant correspond à une commande d'écriture de zone dans la file d'attente de demandes, alors la commande d'écriture de zone est exécutée par le processeur, le numéro de séquence d'écriture de zone courant est incrémenté de un, et la commande d'écriture de zone est supprimée de la file d'attente de demandes ;
lorsqu'une commande d'écriture de zone dans la file d'attente de demandes présente un numéro de séquence qui est supérieur à un numéro de séquence d'écriture de zone courant, alors la commande d'écriture de zone est mise en attente dans la file d'attente de demandes, et une estampille temporelle de délai d'expiration est associée à la commande d'écriture de zone ; ou
lorsqu'une commande d'écriture de zone dans la file d'attente de demandes présente un numéro de séquence qui est inférieur à un numéro de séquence d'écriture de zone courant, alors le processeur abandonne toutes les commandes d'écriture de zone dans la file d'attente de demandes.

2. Dispositif informatique de stockage ZNS selon la revendication 1, dans lequel le processeur est configuré en tant que micrologiciel.

3. Dispositif informatique de stockage ZNS selon la revendication 1, dans lequel le processeur inclut un circuit intégré spécifique à une application, ASIC.

4. Dispositif informatique de stockage ZNS selon la revendication 1, dans lequel
chacune de la pluralité de zones présente un descripteur de zone associé ; et
chaque descripteur de zone présente des numéros de séquence d'écriture de zone associés qui enregistrent un ordre dans lequel des commandes d'écriture de zone sont émises par un dispositif de commande de mémoire d'un dispositif hôte.

5. Dispositif informatique de stockage ZNS selon la revendication 1, dans lequel les numéros de séquence d'écriture de zone sont inclus dans des champs réservés des commandes d'écriture de zone.

6. Dispositif informatique de stockage ZNS selon la revendication 1, dans lequel le processeur est configuré en tant que processeur multicœur et utilise une instruction compare-and-swap, CAS, pour effectuer les comparaisons dans la mémoire partagée du dispositif informatique de stockage ZNS.

7. Procédé de stockage d'espaces de noms zonés, ZNS, pour exécuter des commandes d'écriture de zone (36) sur une mémoire non volatile (18) comprenant une pluralité de zones (40a, 40b), le procédé comprenant :
la réception de commandes d'écriture de zone (36) ; et
en réponse à la réception des commandes d'écriture de zone (36), l'exécution des commandes d'écriture de zone (36) sur une zone donnée de la mémoire non volatile (18) d'un dispositif de stockage (12) dans un ordre spécifié par des numéros de séquence d'écriture de zone (24a, 24b) inclus dans un descripteur de zone pour la zone donnée
dans lequel le procédé comprend en outre :
la conservation de commandes d'écriture de zone provenant d'un dispositif hôte dans une file d'attente de demandes ; et
la comparaison des commandes d'écriture de zone de la file d'attente de demandes aux numéros de séquence d'écriture de zone,
dans lequel un parmi :
lorsqu'un numéro de séquence d'écriture de zone courant correspond à une commande d'écriture de zone dans la file d'attente de demandes, alors la commande d'écriture de zone est exécutée, le numéro de séquence d'écriture de zone courant est incrémenté de un, et la commande d'écriture de zone est supprimée de la file d'attente de demandes ;
lorsqu'une commande d'écriture de zone dans la file d'attente de demandes présente un numéro de séquence qui est supérieur à un numéro de séquence d'écriture de zone courant, alors la commande d'écriture de zone est mise en attente dans la file d'attente de demandes, et une estampille temporelle de délai d'expiration est associée à la commande d'écriture de zone ; ou
lorsqu'une commande d'écriture de zone dans la file d'attente de demandes présente un numéro de séquence qui est inférieur à un numéro de séquence d'écriture de zone courant, alors toutes les commandes d'écriture de zone dans la file d'attente de demandes sont abandonnées.

8. Procédé de stockage ZNS selon la revendication 7, comprenant en outre :
l'extraction du descripteur de zone et des numéros de séquence d'écriture de zone pour la zone donnée à partir d'un dispositif hôte, dans lequel
chacune de la pluralité de zones présente un descripteur de zone associé ; et
chaque descripteur de zone présente des numéros de séquence d'écriture de zone associés qui enregistrent un ordre dans lequel des commandes d'écriture de zone sont émises par un dispositif de commande de mémoire du dispositif hôte.

9. Procédé de stockage ZNS selon la revendication 7, comprenant en outre :
l'extraction des numéros de séquence d'écriture de zone à partir de champs réservés des commandes d'écriture de zone.

10. Procédé de stockage ZNS selon la revendication 7, comprenant en outre :
l'utilisation d'une instruction compare-and-swap, CAS, pour effectuer les comparaisons.
